# EUROPÄISCHE PATENTSCHRIFT

(11) **EP 2 819 892 B1**
(45) Veröffentlichungstag und Bekanntmachung des Hinweises auf die Patenterteilung: **11.04.2018**
(21) Anmeldenummer: 13708370.5
(22) Anmeldetag: 21.02.2013
(51) Int. Cl.: B60R 21/36

(54) **GASSACKANORDNUNGEN FÜR EIN KRAFTFAHRZEUG**
AIRBAG ARRANGEMENT FOR A MOTOR VEHICLE
AGENCEMENT DE SAC DE SÉCURITÉ GONFLABLE POUR VÉHICULE AUTOMOBILE

(30) Priorität: 29.02.2012 DE 102012203116; 10.09.2012 DE 102012215996; 30.11.2012 DE 102012222006
(43) Veröffentlichungstag der Anmeldung: 07.01.2015
(73) Patentinhaber: Takata AG, 63743 Aschaffenburg (DE)
(72) Erfinder: STEINKE, Normen, 10785 Berlin (DE); LUBE, Thomas, 12587 Berlin (DE); PORSTMANN, Marco, 16548 Glienicke/Nordbahn (DE); KALLISKE, Ingo, 14476 Potsdam (DE)
(74) Vertreter: Maikowski & Ninnemann Patentanwälte Partnerschaft mbB
(86) Internationale Anmeldenummer: PCT/EP2013/053452
(87) Internationale Veröffentlichungsnummer: WO 2013/127689

(56) Entgegenhaltungen:
- EP-B1- 1 660 357
- WO-A1-2012/101196
- US-A1- 2010 252 350
- US-B1- 8 016 066

## Beschreibung

Die Erfindung betrifft eine Gassackanordnung für ein Kraftfahrzeug mit einem Gassack, der zum Schutz einer sich außerhalb des Fahrzeugs befindlichen Person entlang zumindest eines Teilabschnitts der Frontscheibe und/oder eines sonstigen Abschnitts einer Außenseite des Kraftfahrzeugs entfaltbar ist, gemäß den Ansprüchen 1 und 9.

Gassackanordnungen mit einem sich im aufgeblasenen Zustand außerhalb des Fahrzeuges (insbesondere entlang der Windschutzscheibe) erstreckenden Gassack, der insbesondere dazu dient, Fußgänger bei einer Kollision mit dem Fahrzeugs zu schützen, sind aus dem Stand der Technik bekannt. Derartige Gassackanordnung sind z. B. in der EP 1 349 752 B1, in der US 8 016 B1, in der EP 1 660 357 B1 und der US 2010/252350 A1 beschrieben.

Des Weiteren offenbaren die Dokumente WO 2013/107801 A1 und EP 2 452 856 A1 einen Fußgängerairbag mit einer Rückholeinrichtung zum Einholen des Airbags. Die WO 2013/107801 A1 und die EP 2 452 856 A1 stellen Stand der Technik nach Artikel 54(3) EPÜ dar.
Das der Erfindung zugrunde liegende Problem besteht darin, eine Gassackanordnung zum Schutz einer sich außerhalb des Fahrzeuges befindlichen Person zu schaffen, die sich möglichst sicher betreiben lässt.

Dieses Problem wird durch die Bereitstellung einer Gassackanordnung mit den Merkmalen des Anspruchs 1 sowie einer Gassackanordnung gemäß Anspruch 9 gelöst. Weiterbildungen der Erfindung sind in den abhängigen Ansprüchen angegeben.

Gemäß einem ersten Aspekt der Erfindung wird eine Gassackanordnung für ein Kraftfahrzeug bereitgestellt, mit
- einem Gassack, der zum Schutz einer sich außerhalb des Fahrzeugs befindlichen Person entlang zumindest eines Teilabschnitts einer Frontscheibe und/oder eines sonstigen Abschnitts einer Außenseite des Kraftfahrzeugs entfaltbar ist;
- einer Einrichtung zum Bewegen zumindest eines Teilabschnittes des aufgeblasenen Gassacks aus dem Sichtfeld des Fahrzeugführers bzw. eines anderen auf den vorderen Fahrzeugsitzen befindlichen Fahrzeuginsassen, wobei
- die Einrichtung zum Bewegen mindestens ein an dem Fahrzeug oder an einem mit dem Fahrzeug fest verbundenen Teil festzulegendes und mit dem Gassack gekoppeltes Verbindungselement aufweist, wobei
- der Gassack eine erste und eine zweite Materiallage aufweist, die ein aufblasbares Volumen des Gassacks begrenzen, wobei
- ein erster Teilabschnitt des Verbindungselements - bezogen auf den aufgeblasenen Zustand des Gassacks - entlang einer Außenseite der ersten Materiallage verläuft und ein zweiter Teilabschnitt des Verbindungselements an der zweiten Materiallage festgelegt ist, und
- die Einrichtung zum Bewegen eine Rückholmechanik zum Einholen des Verbindungselementes und damit des Gassacks aufweist, wobei ein Ende eines ersten Teilabschnitts des Verbindungselementes über die Rückholmechanik mit dem Fahrzeug verbunden ist.

Mit Hilfe der Einrichtung zum Bewegen des Gassacks kann durch das Erzeugen einer Rückstellkraft der sich in Folge einer Kollision entfaltete Gassack (nach dem Erfüllen seiner Schutzfunktion) aus dem Sichtfeld des Fahrers fortbewegt werden, um dem Fahrer eine möglichst ungehinderte Sicht nach vorn zu ermöglichen.

Denkbar ist, dass das Verbindungselement in Form eines Bandes oder Seiles ausgebildet ist, wobei es sich z.B. um ein elastisches Band handelt, dessen beide Enden unmittelbar mit dem Fahrzeug verbunden sind. Möglich ist jedoch auch, dass das Verbindungselement als ein im Wesentlichen unelastisches Seil ausgebildet ist.

Beispielsweise wird die Rückholmechanik durch eine Steuereinheit (Electronic Control Unit - ECU) des Fahrzeugs angesteuert und aktiviert. Es ist allerdings auch möglich, dass der Rückholmechanik selbststeuernd ausgebildet ist.

Bei einer selbststeuernden Auslegung könnte die Rückholmechanik beispielsweise eine Aufwickelspule aufweisen, auf die das Verbindungselement vor Entfalten des Gassacks zumindest teilweise aufgewickelt ist und die mit einer Spiralfeder zusammenwirkt. Bei der Entfaltung des Gassackes entsteht durch den sich im Gassackinneren aufbauenden Druck eine Kraft, die durch das Verbindungselement auf die Aufwickelspule übertragen wird und die Spiralfeder spannt. Die Spiralfeder wird dabei aufgewickelt, während das Verbindungsmittel von der Aufwickelspule abgewickelt wird. Sinkt der Gassackinnendruck, reduziert sich die auf die Aufwickelspule übertragene Kraft. Die Spiralfeder wickelt sich wieder ab (entspannt sich), wodurch das Verbindungselement von der Aufwickelspule aufgewickelt und der Gassack zurück aus dem Sichtfeld des Fahrzeugführers gezogen wird. Bei einer ECU-gesteuerten Rückholeinrichtung ist z.B. ein Aktuator vorgesehen, über den das Verbindungselement bewegt werden kann. Als Aktuator können beispielsweise ein Elektromotor, welcher eine Aufwickelspule antreibt, eine bereits vorgespannte Federeinheit oder eine pyrotechnisch angetriebene Kolben-Zylindereinheit vorgesehen sein.

Das Verbindungselement erstreckt sich - im aufgeblasenen Zustand des Gassacks - z.B. (etwa ausschließlich) entlang eines der Fahrerseite zugeordneten Bereichs des Gassacks. Denkbar ist natürlich auch, dass das Verbindungselement sowohl im Bereich der Fahrer- sowie der Beifahrerseite verläuft oder zumindest zwei Verbindungselemente vorhanden sind, von denen sich eines im Bereich der Fahrerseite befindet und das andere im Bereich der Beifahrerseite.

Der Gassack weist insbesondere mehrere aufblasbare Kammern auf, die sich im entfalteten Zustand des Gassacks hintereinander (insbesondere übereinander) entlang der Windschutzscheibe des Fahrzeugs erstrecken. Z.B. weist der Gassack drei Kammern auf, wobei sich die zweite Kammer zwischen der ersten und der dritten Kammer befindet und die zweite Kammer z.B. über ein erstes Trennelement von der ersten Kammer und über ein zweites Trennelement von der dritten Kammer getrennt ist. Beide Trennelemente verlaufen z.B. annähernd parallel zueinander. Es wird darauf hingewiesen, dass die Anordnung von drei Kammern beispielhaft zu verstehen ist. Bei einer gewünschten geringeren Abdeckung der Windschutzscheibe können auch nur zwei Kammern vorgesehen sein, wobei dann lediglich ein Trennelement notwendig ist. Darüber hinaus weist die Gassackanordnung insbesondere ein Modulgehäuse auf, in dem der Gassack vor dem Entfalten untergebracht ist, und das z.B. unter einer Abdeckung (z.B. eine Motorhaube oder eine Haube, die einen sich im vorderen Bereich des Fahrzeugs vorgesehenen Kofferraum abdeckt) des Fahrzeugs angeordnet ist.

Prinzipielle Ausgestaltungen der Gassackanordnung, insbesondere des Gassacks und der Rückholmechanik, sind in den internationalen Patentanmeldungen PCT/EP 2012/051190 (veröffentlicht unter WO 2012/101198) vom 26.01.2012 und PCT/EP 2012/051188 (WO 2012/101196) ebenfalls vom 26.01.2012 beschrieben. Der Verlauf des Verbindungselementes führt insbesondere nicht bis zu einem Rand des Gassacks, sondern gewissermaßen durch den Gassack hindurch, was insbesondere eine Reduzierung der Länge des (z.B. band- oder seilartigen) Verbindungselementes und damit z.B. die Verwendung kompakterer Rückholeinrichtungen (s.o.) ermöglicht. Zudem kann eine Führungseinrichtung zum Führen des Verbindungselementes vereinfacht werden; etwa kann eine im Vergleich zu einem Verbindungselement, das nur auf einer Seite oder entlang eines Randes des Gassacks verläuft, geringere Anzahl von Schlaufen zur Führung des Verbindungselementes vorgesehen sein, wodurch insbesondere Reibungsverluste und damit die von der Rückholeinrichtung aufzubringende Rückstellkraft reduziert werden können.

Bei den beiden Materiallagen (z.B. in Form von Gewebelagen) des Gassacks handelt es sich z.B. um separate Lagen, die miteinander (z.B. über eine Umfangsnaht) verbunden sind. Denkbar ist jedoch auch, dass die beiden Materiallagen einstückig miteinander ausgebildet sind, wobei von einem einzigen Zuschnitt ausgegangen wird, der zum Bilden der beiden Lagen umgefaltet wird.

Die erste Materiallage des Gassacks weist insbesondere mindestens eine Öffnung auf, durch die das Verbindungselement in das Innere des Gassacks eintritt. Beispielsweise befindet sich die Öffnung in einer der Frontscheibe (oder des sonstigen Abschnitts der Außenseite des Kraftfahrzeugs) zugewandten (ersten) Materiallage.

Das Verbindungselement verläuft - bezogen auf den aufgeblasenen Zustand des Gassacks - mit dem ersten Teilabschnitt zwischen der Frontscheibe des Fahrzeugs oder des sonstigen Abschnitts der Außenseite des Kraftfahrzeugs und der ersten Materiallage des Gassackes. Insbesondere erstreckt sich das Verbindungselement von einem Verbindungspunkt (etwa der Rückholeinrichtung), an dem es (unmittelbar oder mittelbar) mit dem Fahrzeug verbunden ist, kommend bis zu der Öffnung des Gassacks zwischen dem Gassack und der Frontscheibe (oder des sonstigen Abschnitts der Außenseite des Kraftfahrzeugs) und tritt über die Öffnung in das Innere des Gassacks ein.

Der zweite Teilabschnitt des Verbindungselementes (insbesondere ein Ende des zweiten Teilabschnitts) ist z.B. an einer Innenseite der zweiten Materiallage des Gassacks, die z.B. der Frontscheibe abgewandt ist, festgelegt (etwa angenäht oder angeklebt). Denkbar ist auch, dass die zweite Materiallage eine weitere Öffnung des Gassacks aufweist, in der der zweite Teilabschnitt festgelegt ist; etwa über ein Blockierelement, das sich vor die Öffnung legt, bzw. dort positioniert ist und das Hineinziehen des zweiten Teilabschnitts in das Gassackinnere blockiert. Denkbar ist auch, dass das Verbindungselement durch die weitere Öffnung aus dem Gassackinneren austritt und an einer Außenseite des Gassacks festgelegt ist.

Gemäß einer anderen Weiterbildung der Erfindung verlaufen der erste und der zweite Teilabschnitt des Verbindungselementes im aufgeblasenen Zustand des Gassacks unter einem (z.B. zumindest näherungsweise rechten) Winkel zueinander.

Gemäß einer anderen Variante der Erfindung weist der Gassack eine Aussparung aufweist, durch die hindurch der zweite Teilabschnitt des Verbindungselementes verläuft. Das Verbindungselement tritt somit nicht über eine Öffnung der ersten Materiallage in den Gassack ein, sondern verläuft in der Aussparung (z.B. im Wesentlichen senkrecht zur Haupterstreckungsrichtung des Gassacks) von der Außenseite der ersten Materiallage zu der zweiten Materiallage.

In einem zweiten Aspekt betrifft die Erfindung eine Gassackanordnung für ein Kraftfahrzeug, mit
- einem Gassack, der zum Schutz einer sich außerhalb des Fahrzeugs befindlichen Person entlang zumindest eines Teilabschnitts der Frontscheibe und/oder eines sonstigen Abschnitts einer Außenseite des Kraftfahrzeugs entfaltbar ist; und
- einer Einrichtung zum Bewegen zumindest eines Teilabschnittes des aufgeblasenen Gassacks aus dem Sichtfeld des Fahrzeugführers, wobei
- die Einrichtung zum Bewegen mindestens ein mit dem Gassack gekoppeltes Verbindungselement aufweist, das mit seinem ersten und mit seinem zweiten Ende an dem Fahrzeug oder an einem mit dem Fahrzeug fest verbundenen Teil (z.B. in Form eines unter einer Abdeckung des Fahrzeug angeordneten Gehäuse der Gassackanordnung) festzulegen ist (so dass beide Enden des Verbindungsmittels an einem fahrzeugfesten Teil fixiert sind), und
- die Einrichtung zum Bewegen eine Rückholmechanik zum Einholen des Verbindungselementes und damit des Gassacks aufweist, wobei das erste Ende außerhalb des Gassacks an dem Kraftfahrzeug oder an einem mit dem Kraftfahrzeug fest verbundenen Teil festzulegen ist und das zweite Ende des Verbindungselementes über die Rückholmechanik mit dem Fahrzeug verbunden ist.

Gemäß einer Weiterbildung der Gassackanordnung nach dem zweiten Aspekt der Erfindung ist das Verbindungselement zur Kopplung mit dem Gassack durch eine an dem Gassack vorhandene Führungsvorrichtung geführt und/oder über Befestigungsmittel an dem Gassack befestigt. Beispielsweise umfasst die Führungsvorrichtung mindestens eine Schlaufe, die so ausgebildet ist, dass sich das hindurchgeführte Verbindungselement relativ dazu bewegen kann. Die mindestens eine Schlaufe ist z.B. ein separates Teil, das mit dem Gassack verbunden wird. Denkbar ist jedoch auch, dass die Schlaufe(n) einstückig mit dem Gassack ausgebildet ist (sind), z.B. als Fortsatz zumindest einer Materiallage des Gassacks, die sein aufblasbares Volumen begrenzt.

Gemäß einer Ausgestaltung der Erfindung ist das Verbindungselement mittels der Führungsvorrichtung so geführt, dass es - bezogen auf den aufgeblasenen Zustand des Gassacks - zumindest mit einem Abschnitt zumindest näherungsweise parallel zu einer durch die Fahrzeugquer- und Fahrzeughöhenrichtung aufgespannten Ebene und/oder parallel zu einer durch die Fahrzeuglängs- und die Fahrzeughöhenrichtung aufgespannten Ebene verläuft.

Denkbar ist auch, dass das Verbindungselement mit Hilfe der Führungsvorrichtung so geführt ist, dass es zumindest abschnittsweise entlang der Haupterstreckungsebene des aufgeblasenen Gassacks verläuft, insbesondere entlang einer dem Fahrzeug zugewandten Seite des Gassacks. Möglich ist jedoch auch, dass zumindest ein Abschnitt des Verbindungselementes auf der dem Fahrzeug abgewandten Seite des Gassacks verläuft.

Beispielsweise weist das Verbindungselement einen Abschnitt auf, der sich zumindest näherungsweise parallel zu einem oberen Rand des Gassacks erstreckt, wobei der "obere" Rand des Gassacks derjenige Rand des Gassacks ist, der im aufgeblasenen Zustand des Gassacks von einer Abdeckung des Fahrzeugs (etwa in Form der Motorhaube, s.o.) abgewandt und z.B. zumindest näherungsweise entlang der Fahrzeugquerrichtung verläuft. Der sich parallel zu einem oberen Rand des Gassacks erstreckende Abschnitt des Verbindungselementes verläuft beispielsweise entlang des oberen Randes, d.h. genau am Rand oder in einem nur geringen Abstand (von z.B. nicht mehr als 5 cm) vom oberen Rand entfernt. Möglich ist jedoch auch, dass der Abschnitt des Verbindungselementes in einem Abstand zu dem oberen Rand des Gassacks verläuft, z.B. etwa in seiner Mitte (entlang der Fahrzeughöhenrichtung betrachtet).

Der Gassack weist - wie oben in Bezug auf den ersten Aspekt bereits erwähnt - insbesondere zwei deckungsgleiche, z.B. einstückig miteinander verbundene Gassacklagen (Materiallagen) auf, die das aufblasbare Volumen des Gassacks begrenzen. Im flach ausgebreiteten Zustand des nicht aufgeblasenen Gassacks liegen die beiden Gassacklagen aufeinander, wobei der Umfang der Gassacklagen den "Rand" des Gassacks definiert. Insbesondere sind die beiden Gassacklagen über eine Umfangsnaht miteinander verbunden, die entlang ihres Randes verläuft, so dass der Umfang der Gassacklagen auch den Rand des aufgeblasenen Gassacks definiert.

Denkbar ist auch, dass das Verbindungselement einen ersten Abschnitt aufweist, der sich zwischen dem ersten Ende des Verbindungselementes und dem sich parallel zum oberen Rand des Gassacks erstreckenden (zweiten) Abschnitt des Verbindungselementes erstreckt, sowie einen dritten Abschnitt, der sich zwischen dem zweiten Abschnitt und dem zweiten Ende des Verbindungselementes erstreckt. Der erste und der dritte Abschnitt sind insbesondere unter einem Winkel zum zweiten Abschnitt orientiert.

Insbesondere ist der zweite Abschnitt des Verbindungselementes parallel zu einer durch die Fahrzeugquer- und die Fahrzeughöhenrichtung aufgespannten Ebene orientiert, während sich der erste und/oder der dritte Abschnitt etwa parallel zu einer durch die Fahrzeuglängs- und die Fahrzeughöhenrichtung aufgespannten Ebene erstrecken. Beispielsweise erstrecken sich sowohl der erste als auch der dritte Abschnitt des Verbindungselementes beanstandet von dem Rand (insbesondere eines seitlichen Abschnitts) des Gassacks. Daher kann das Verbindungselement eine geringere Länge aufweisen als bei einem Verlauf des Verbindungselementes entlang längerer Abschnitte des seitlichen Gassackrandes. Zudem kann ggf. die Anzahl der Schlaufen zu Führung des Verbindungselementes reduziert werden, was auftretende Reibungsverluste und damit aufzubringenden Rückstellkräfte minimiert. Außerdem kann dadurch die Handhabung beim Falten und Verstauen des Gassackes vereinfacht werden.

Die Führung des zweiten Abschnitts erfolgt insbesondere über eine entlang des oberen Gassackrandes orientierte (zweite) Schlaufe, während die Führung des ersten und des dritten Abschnitts des Verbindungselementes jeweils über eine unter einem Winkel zu dem oberen Gassackrand orientierte erste bzw. dritte Schlaufe erfolgt. Die zweite Schlaufe weist insbesondere eine Länge auf, die größer als die Länge der ersten oder dritten Schlaufe ist.

Es wird darauf hingewiesen, dass Elemente, die im Zusammenhang mit dem ersten Aspekt der Erfindung beschrieben wurden, natürlich auch mit der Gassackanordnung gemäß dem zweiten Aspekt verwendet werden können. Beispielsweise können die Rückholmechanik, der Gassack und/oder das Verbindungselement wie weiter oben in Bezug auf den ersten Aspekt der Erfindung erläutert ausgebildet sein. Umgekehrt können auch Elemente, die in Zusammenhang mit dem zweiten Erfindungsaspekt beschrieben wurden, in der Gassackanordnung gemäß dem ersten Aspekt der Erfindung verwendet werden.

Die Erfindung betrifft auch ein Fahrzeug mit der erfindungsgemäßen Gassackanordnung gemäß dem ersten oder dem zweiten Aspekt der Erfindung. Beispielsweise betrifft die Erfindung ein Fahrzeug, wobei das Verbindungselement mit einem Ende an dem Fahrzeug oder an einem mit dem Fahrzeug fest verbundenen Teil festgelegt ist. Insbesondere betrifft die Erfindung ein Fahrzeug mit einer Gassackanordnung gemäß dem zweiten Aspekt der Erfindung, wobei das Verbindungselement mit seinem ersten und mit seinem zweiten Ende an dem Fahrzeug oder an einem mit dem Fahrzeug fest verbundenen Teil festgelegt ist.

Die Erfindung wird im Folgenden anhand von Ausführungsbeispielen unter Bezugnahme auf die Figuren näher erläutert. Es zeigen:
- Fig. 1: eine Draufsicht auf eine Gassackanordnung gemäß einem Ausführungsbeispiel der Erfindung nach Entfaltung des Gassacks;
- Fig. 2: eine Schnittansicht der Gassackanordnung aus Fig. 1;
- Fig. 3: eine Abwandlung des Ausführungsbeispiels der Fig. 1;
- Fig. 4: eine Draufsicht auf eine Gassackanordnung gemäß einem weiteren Ausführungsbeispiel der Erfindung nach Entfaltung des Gassacks;
- Fig. 5A bis D: den Ablauf der Rückholung des aufgeblasenen Gassacks;
- Fig. 6: die Führung des zweiten Teilabschnitt eines Rückholseiles;
- Fig. 7: eine Abwandlung der Fig. 6; und
- Fig. 8: einen Gassack einer Gassackanordnung gemäß einem anderen Ausführungsbeispiel der Erfindung.

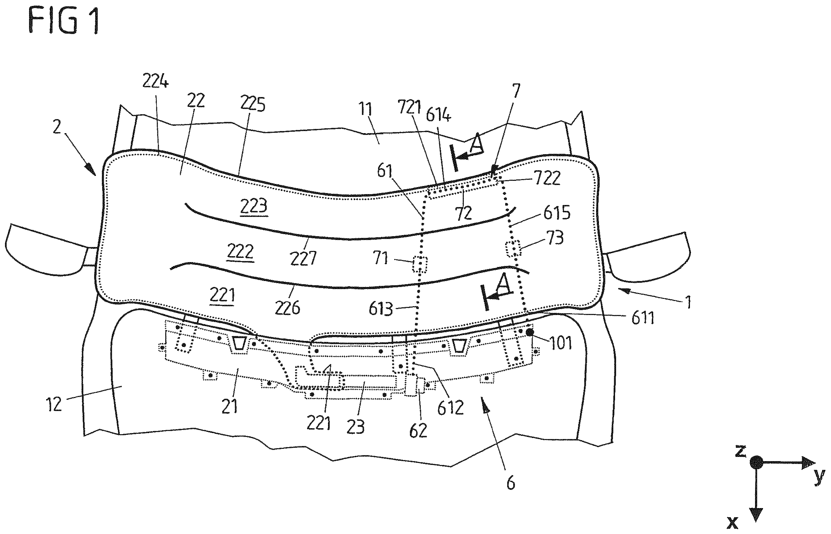

Fig. 1 zeigt in Draufsicht eine an einem Kraftfahrzeug 1 angeordnete erfindungsgemäße Gassackanordnung 2 nach dem Aufblasen ihres Gassacks 22, wobei der Gassack 22 einen Teil einer Frontscheibe 11 des Fahrzeugs 1 abdeckt. Die Gassackanordnung 2 weist des Weiteren ein unterhalb einer Motorhaube 12 des Fahrzeugs 1 angeordnetes Gassackmodulgehäuse 21 auf, aus dem heraus sich der Gassack 22 in Richtung auf die Frontscheibe 11 entfaltet hat. Die Motorhaube 12 kann für die Entfaltung des Gassacks 22 an ihrer der Frontscheibe 11 zugewandten Seite durch den Gassack 22 selbst, bzw. durch eine separate Einrichtung angehoben werden. Zum Aufblasen des Gassacks 22 weist die Gassackanordnung 2 zudem einen innerhalb des Modulgehäuses 21 befindlichen Gasgenerator 23 auf, der in einen Einblasbereich 221 des Gassacks 22 hineinragt. Der Gassack 22 weist drei entlang der Frontscheibe 11 übereinander angeordnete Kammern 221-223 auf.

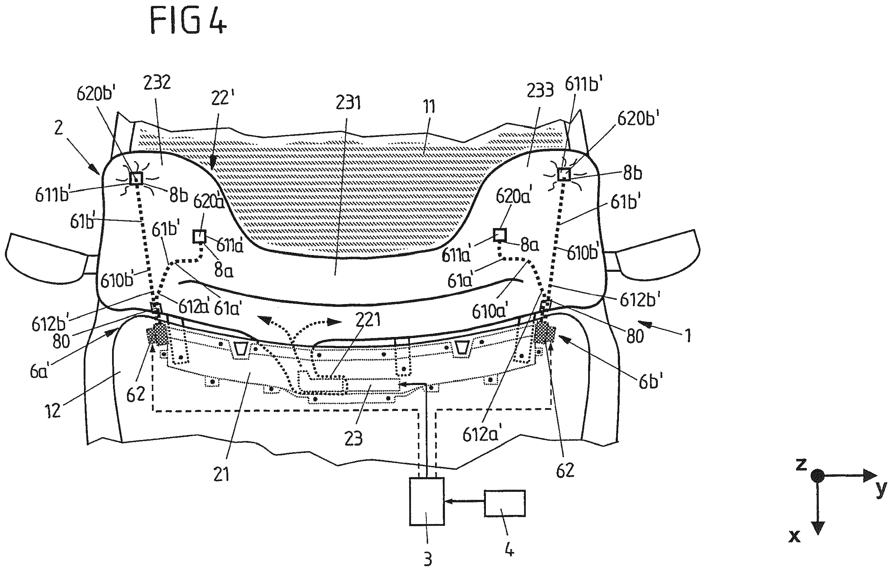

Das Aufblasen des Gassacks 22 über den Gasgenerator 23 erfolgt wie oben bereits erwähnt insbesondere in Abhängigkeit eines Steuersignals einer ECU 3 (s. auch Fig. 4) des Fahrzeugs 1, wobei über Sensoren 4 erfasste Parameter bzgl. des Fahrzeugzustandes von der ECU 3 verarbeitet werden. Werden im Fall einer unmittelbar bevorstehenden oder bereits begonnenen Kollision mit einer außerhalb des Fahrzeugs befindlichen Person ermittelte oder hinterlegte Schwell- bzw. Grenzwertewerte überschritten, erzeugt die ECU 3 zur Aktivierung des Gasgenerators 23 ein Steuersignal, worauf der Gassack 22 durch die durch den Gasgenerator 23 erzeugten Gase aufgeblasen wird.

Ein eine bei einer Kollision auf das Fahrzeug aufprallende Person schützender Bereich des Gassackes 22 (der Schutzbereich des Gassacks, d.h. insbesondere derjenige Bereich des Gassacks, der sich über die Frontscheibe 11 und einen der Frontscheibe 11 zugewandten Abschnitt der Motorhaube 12 und die sonstige vordere Fahrzeugkarosserie erstreckt) befindet sich z.B. vollkommen außerhalb des durch die Motorhaube abgedeckten Motorraums. Der Schutzbereich des Gassacks 22 deckt insbesondere den unteren Bereich der Frontscheibe 11 sowie z.B. auch Bereiche der an die Frontscheibe 11 angrenzenden beiden A-Säulen des Fahrzeugs ab.

Des Weiteren weist die Gassackanordnung 2 eine Einrichtung (in Form einer Rückholeinrichtung 6) zum Bewegen des aufgeblasenen Gassacks aus dem Sichtfeld des Fahrzeugführers heraus auf. Die Rückholeinrichtung 6 ist vorliegend auf der Fahrerseite angeordnet (alternativ oder zusätzlich auch auf der Beifahrerseite möglich bzw. für Fahrer-und Beifahrerseite vorgesehen) und soll nach der Entfaltung des Gassackes 22 und dem eventuellen Aufprall einer Person die Sicht nach vorn, speziell für den Fahrzeugführer, wieder ermöglichen.

Die Rückholeinrichtung 6 kann selbststeuernd ausgelegt und/oder über die ECU 3 des Fahrzeugs ansteuerbar und aktivierbar sein. Die Rückholeinrichtung 6 umfasst ein Verbindungselement in Form eines Rückholseiles 61, das mit seinem ersten Ende 611 fest mit einem Verbindungsbereich 101 des Fahrzeugs 1 verbunden ist. Das zweite Ende 612 des Rückholseiles 61 ist über eine Rückholmechanik 62 der Rückholeinrichtung 6 an dem Fahrzeug festgelegt. Das Rückholseil 61 ist darüber hinaus über eine Führungsvorrichtung 7 bestehend aus einer ersten, zweiten und dritten Schlaufe 71-73 mit dem Gassack 22 gekoppelt.

Die Rückholmechanik 62 weist z.B. eine mit einer Spiralfeder zusammenwirkende Aufwickelspule auf. Bei der Entfaltung des Gassackes 22 entsteht durch den sich im Gassackinneren aufbauenden Druck eine Kraft, die über das Rückholseil 61 auf die Aufwickelspule übertragen wird, so dass sich die Spiralfeder spannt. Die Spiralfeder wird dabei aufgewickelt. Sinkt der Gassackinnendruck, reduziert sich die auf die Aufwickelspule übertragene Kraft, worauf sich die Spiralfeder wieder abwickelt (sich entspannt) und dabei das Rückholseil 61 auf die Aufwickelspule aufwickelt und damit den Gassack 22 aus dem Sichtfeld des Fahrzeugführers zurückzieht. Denkbar ist auch, dass die Rückholeinrichtung 6 so ausgestaltet ist, dass sie über ein Signal der ECU 3 ausgelöst wird. In diesem Fall weist die Rückholmechanik 62 z.B. einen Aktuator auf, der den Rückholvorgang realisiert. Als Aktuator könnte beispielsweise ein Elektromotor, welcher die Aufwickelspule antreibt, eine pyrotechnisch angetriebene Kolben-Zylindereinheit oder eine bereits vorgespannte Federeinheit vorgesehen sein. Der Grundsätzliche Aufbau der Gassackanordnung und insbesondere der Rückholmechanik ist im Detail in der oben bereits erwähnten internationalen Patentanmeldung PCT/EP 2012/051188 (WO 2012/101196) vom 26.01.2012 beschrieben, die insofern in diese Anmeldung einbezogen wird.

Das Rückholseil 61 umfasst einen von der Rückholmechanik 62 kommenden ersten Teilabschnitt 613 auf, der mittels der im - bezogen auf die Fahrzeughöhenrichtung - mittleren Bereich, d.h. im Bereich der mittleren Kammer 222, des Gassacks 22 an diesem festgelegten ersten (seitlichen) Schlaufe 71 so geführt ist, dass er schräg, jedoch nicht exakt senkrecht zum einem oberen Rand 225 des Gassacks 22 verläuft. Der obere Rand 225 des Gassacks 22 ist im Wesentlichen entlang der Fahrzeugquerrichtung orientiert.

An den ersten Teilabschnitt 613 des Rückholseiles 61 schließt sich ein zweiter Teilbereich 614 an, der in der zweiten Schlaufe 72 geführt ist. Die zweite Schlaufe 72 verläuft entlang eines Teilabschnitts des oberen Randes 225, so dass entsprechend auch der zweite Teilabschnitt 614 des Rückholseiles 61 entlang dieses Randabschnitts des Gassacks verläuft. Denkbar ist z.B., dass der zweite Teilabschnitt 614 des Rückholseiles 61 im Bereich einer Umfangsnaht 224 des Gassacks 22, über die zwei Materiallagen des Gassacks 22 miteinander verbunden sind, verläuft, wobei er die Umfangsnaht 224 z.B. zumindest teilweise überdeckt oder nur in einem geringen Abstand zu der Umfangsnaht 224 verläuft. Beispielsweise verläuft der zweite Teilabschnitt 614 des Rückholseiles 61 parallel zum dem Randabschnitt 225 des Gassacks 22 in einem Abschnitt von höchstens 10 cm oder höchstens 5 cm.

Ein sich an den zweiten Teilabschnitt 614 anschließender dritter Teilabschnitt 615 des Rückholseiles 61 erstreckt sich von einem dem ersten Teilabschnitt 613 abgewandten Ende der zweiten Schlaufe 72 bis zu dem mit dem Fahrzeug 1 verbundenen Ende 611. Der dritte Teilabschnitt 615 ist mit Hilfe der dritten (seitlichen) Schlaufe 73 geführt, die mit dem Gassack 22 im Bereich seiner mittleren Kammer 222 verbunden und ähnlich wie die erste Schlaufe 71 deutlich kürzer als die erste Schlaufe 72 ausgebildet ist. Die dritte Schlaufe 73 ist so angebracht, dass der dritte Teilabschnitt 615 zumindest näherungsweise senkrecht zu dem zweiten Teilabschnitt 614 des Rückholseiles 61 verläuft.

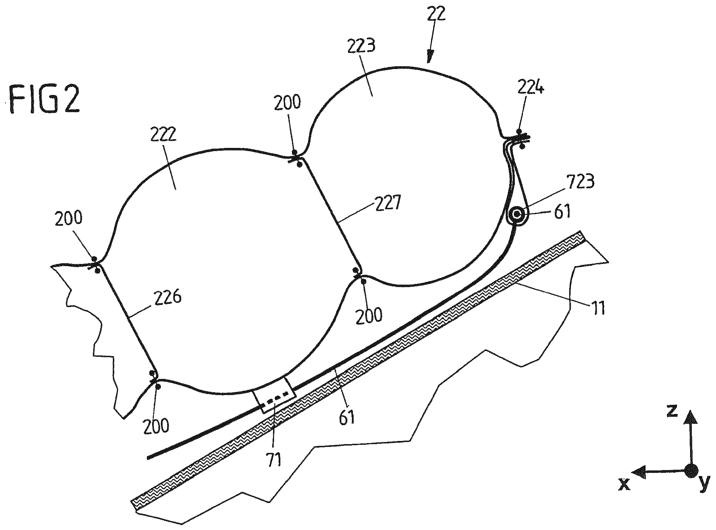

Die Schlaufen 71 - 73 sind insbesondere durch eine umgeschlagene Materiallage gebildet, deren freie Seiten an dem Gassack 22 festgelegt sind. Beispielsweise ist die erste und die dritte Schlaufe 71, 73 an einem Abschnitt einer Materiallage des Gassacks 22, der die mittlere Kammer 222 begrenzt festgelegt, z.B. festgenäht. Analog ist die zweite Schlaufe 72 an einem Abschnitt einer Materiallage, die die obere Kammer 223 des Gassacks 22 begrenzt, festgelegt. Denkbar ist auch, dass die zweite Schlaufe 72, insbesondere deren freie Seiten, über die Umfangsnaht 224 an dem Gassack 22 festgelegt ist (s. Fig. 2).

Im Vergleich zu den Schlaufen 71 und 73 weist die obere (zweite) Schlaufe in 72 Durchtrittsrichtung des Rückholseiles 61, d.h. entlang des oberen Randes 225 des Gassacks 22, eine wesentlich größere Länge auf. Über diese Länge der zweiten Schlaufe 72 kann die Länge des Rückholseiles 61 (d.h. die Länge des zweiten Teilabschnittes 614), über die bei der Rückholung des Gassacks 22 nach Aktivieren der Rückholeinrichtung 6 Kraft in den Gassack 22 eingeleitet wird, beeinflusst werden. Die zweite Schlaufe 72 ist zwar durchgehend dargestellt. Es ist jedoch auch denkbar, dass anstelle einer durchgehenden Schlaufe mehrere entlang des oberen Randes 225 des Gassacks 22 hintereinander angeordnete Schlaufen verwendet werden.

Die Figur 2 zeigt einen Schnitt entlang der Ebene A-A in Fig. 1, aus der zu entnehmen ist, dass die Kammern 221-223 des Gassacks 22 mit Hilfe zweier im Wesentlichen parallel zum oberen Rand 225 des Gassacks 22 (d.h. im Wesentlichen entlang der Fahrzeugquerrichtung) verlaufender Fangbänder 226, 227 voneinander getrennt sind. Die Fangbänder 226, 227 sind über Nähte 200 mit dem Gassack 22 (d.h. mit einer der Frontscheibe 11 zugewandten Materiallage bzw. mit einer der Frontscheibe 11 abgewandten Materiallage des Gassacks 22) verbunden.

Die Schlaufen 71 - 73 können separate Teile sein, die über Verbindungsmittel (z.B. über eine Naht) mit dem Gassack 22 verbunden werden. Denkbar ist jedoch auch, dass die Schlaufen 71 - 73 einstückig mit dem Gassack 22 ausgebildet sind. Insbesondere kann die obere (zweite) Schlaufe 72 aus einem gemeinsamen Zuschnitt mit einer der Materiallagen des Gassacks 22 ausgeformt sein, beispielsweise ist die Schlaufe Teil der der Frontscheibe 11 zugewandten Materiallage. Darüber hinaus sind die Schlaufen 71 - 73 einlagig dargestellt. Es ist jedoch auch möglich, dass zumindest eine der Schlaufen 71 - 73 Festigkeitsgründen mehrlagig ausgeführt ist.

Bei aktivierter Rückholeinrichtung 6 sind die in Durchtrittsrichtung des Rückholseiles 61 einander gegenüberliegenden Enden 721, 722 der zweiten (oberen) Schlaufe 72 besonders hohen Belastungen ausgesetzt. Dies trifft besonders zu, wenn das Rückholseil 61 mit einem geringen Querschnitt, beispielsweise als Metall- oder Kunststoffseil, ausgeführt ist. Um ein Einschneiden der Enden der zweiten Schlaufe 72 durch das Rückholseil 61 zu verhindern, kann in der Schlaufe 72 ein Versteifungselement 723 vorgesehen sein, das den zweiten Teilabschnitt 614 des Rückholseiles 61 zumindest über einen Teil dessen Länge (und dabei z.B. um den gesamten Umfang herum) umgibt.

Dadurch ist der Einsatz von Rückholseilen mit kleinem Durchmesser, z.B. höchstens 2 mm, möglich. Das Versteifungselement 723 kann beispielsweise als dünnwandiges, relativ flexibles Kunststoffrohr ausgeführt sein, durch welches das Rückholseil 61 hindurch verläuft. Das Vorsehen des Versteifungselementes 723 kann außerdem der Tendenz des Zusammenschiebens der Schlaufe 72 auf dem Rückholseil 61 nach Aktivieren der Rückholeinrichtung 6 entgegenwirken und somit zur Aufrechterhaltung eines möglichst großen Krafteinleitungsbereiches beitragen.

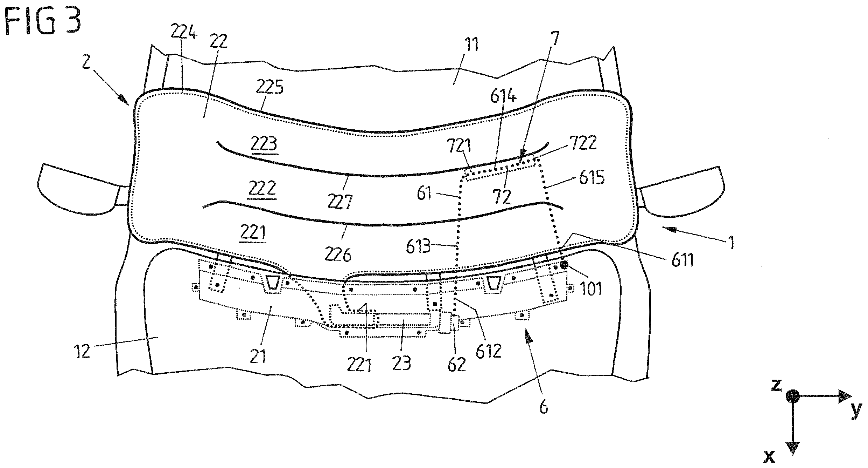

Die Figur 3 betrifft eine Abwandlung der Fig. 1, wonach der zweite Teilabschnitt 72 des Rückholseiles 61 nicht entlang des oberen Randes 225 des Gassacks 22 geführt ist, sondern zwar parallel, jedoch mit einem Abstand zum oberen Rand 225 verläuft. Insbesondere verläuft der zweite Teilabschnitt 72 in einem oberen Teilbereich der mittleren Kammer 222 des Gassacks 22 (im Übergangsbereich zwischen der mittleren und der oberen Gassackkammer 222, 223), wobei der zweite Teilabschnitt 72 durch eine in diesem Bereich angebrachte Schlaufe 72 geführt wird. Auf die seitlichen Schlaufen 71, 73 kann (bei entsprechender Dimensionierung des Rückholseiles 61) verzichtet werden. Denkbar ist allerdings auch, dass seitliche Schlaufen verwendet werden, die z.B. im Bereich der unteren Kammer 221 des Gassacks 22 angeordnet sind.

Die Schlaufe 72 ist z.B. über eine Naht (Naht 200 in Fig. 2) zusammen mit dem Fangband 227, das die zweite von der dritten Kammer 222, 223 trennt, mit dem Gassack 22 verbunden.

Fig. 4 betrifft eine weiteres Ausführungsbeispiel einer erfindungsgemäßen Gassackanordnung 2 (gemäß dem ersten Aspekt der Erfindung), die einen Gassack 22' aufweist, der anders als der Gassack 22 der Fig. 1 einen - in Fahrzeugquerrichtung betrachtet - mittleren Bereich 231 aufweist, sowie zwei seitliche Bereiche 232, 233, die sich im jeweils aufgeblasenen Zustand über eine A-Säule des Fahrzeugs 1 hinweg erstrecken und die entsprechend entlang einer parallel zur Frontscheibe 11 weisenden Richtung (entlang der Verlaufsrichtung der A-Säule) eine größere Ausdehnung besitzen als der mittlere Bereich 231.

Anstelle des mit beiden Enden am Fahrzeug 1 festgelegten Rückholseils weist die Gassackanordnung der Fig. 4 zwei, im Bereich der seitlichen Bereiche 232, 233 des Gassacks 22' angeordnete Rückholeinrichtungen 6a', 6b' mit jeweils zwei Verbindungselementen in Form zweier Rückholseile 61a', 61b' auf. Die Rückholseile 61a', 61b' sind jeweils nur mit einem Ende 612a', 612b' mit der Rückholmechanik 62 der Rückholeinrichtung 6' und damit mit dem Fahrzeug 1 verbunden. Das jeweils andere Ende 611a', 611b' ist am Gassack 22' festgelegt. Es wird darauf hingewiesen, dass die in Fig. 4 dargestellte Anordnung von jeweils zwei Rückholseilen lediglich beispielhaft zu verstehen ist. Ebenso können auch mehr als zwei oder auch nur ein Rückholseil vorgesehen sein.

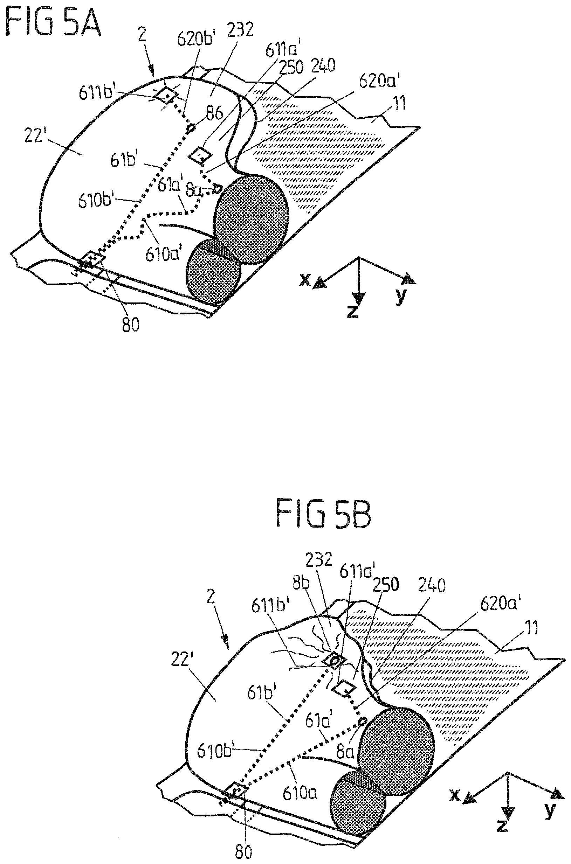

Die Rückholseile 61a', 61b' umfassen jeweils einen ersten, von der Rückholmechanik 62 kommenden und sich zwischen der Frontscheibe 11 und einer der Frontscheibe 11 zugewandten Seite (Gassackunterseite) einer ersten Materiallage 240 (vgl. Fig. 5A) des Gassacks 22' erstreckenden ersten Teilabschnitt 610a', 610b'. An den ersten Teilabschnitt 610a', 610b' schließt sich jeweils ein zweiter Teilabschnitt 620a', 620b' an, der über eine in der der ersten Materiallage 240 des Gassacks 22' ausgebildete Öffnung (Durchdringungspunkt) 8a, 8b in das Gassackinnere eintritt und somit vor dem Auslösen der Rückholeinrichtung 6a', 6b' im Inneren des Gassacks 22' verläuft (vgl. auch die Fig. 5A bis 5D).

Die Enden der zweiten Teilabschnitte 620a', 620b' sind jeweils an einer zweiten, der Frontscheibe 11 abgewandten Materiallage 250 (Fig. 5A) des Gassacks 22' festgelegt, wobei jeweils das Ende 611b' des zweiten Teilabschnitts 620b' des äußeren Rückholseils 61b' weiter oben (in die seitlichen Bereiche 232, 233 des Gassacks 22' hinein, insbesondere im Bereich eines oberen Randes 225 des Gassacks) als das Ende 611a' des zweiten Teilabschnitts 620a' des inneren Rückholseils 61a', das sich im Übergangsbereich zwischen den seitlichen Abschnitten 232, 233 und dem mittleren Abschnitt 231 des Gassacks 22' befindet, am Gassack 22' festgelegt ist.

Die Enden 611a', 611b' der zweiten Teilabschnitte 620a', 620b' sind zudem z.B. an einer Innenseite (dem aufblasbaren Inneren des Gassacks 22' zugewandt) der der Frontscheibe 11 abgewandten zweiten Materiallage 250 des Gassacks 22' festgelegt. Die Befestigung der zweiten Teilabschnitte 620a', 620b' am Gassack 22' erfolgt insbesondere über Verstärkungslagen, die im Bereich der Enden der zweiten Teilabschnitte 620a', 620b' an der zweiten Materiallage 250 angeordnet sind. Darüber hinaus können auch die Öffnungen 8a, 8b mit an der ersten Materiallage 240 angeordneten Verstärkungen versehen sein.

Vorliegend erstrecken sich die zweiten Teilabschnitte 620a', 620b' der Rückholseile 61a', 61b' im aufgeblasenen Gassack zumindest annähernd senkrecht zur Frontscheibe 11 des Fahrzeugs 1. Dies ist jedoch nicht zwingend. Vielmehr kann je nach baulichen Gegebenheiten auch ein anderer Verlauf der zweiten Teilabschnitte 620a', 620b' vorgegeben sein.

Im Bereich des Übergangs zwischen der Frontscheibe 11 und der Motorhaube 12 des Fahrzeugs 1 verlaufen die ersten Teilabschnitte 610a', 610b' der Rückholseile 61a', 61b' durch eine Führung 80 hindurch. Dies bewirkt, dass beim Zurückholen des Gassackes 22' die sich in Richtung Gassack aufspreizenden Rückholseile 61a', 61b' gebündelt (zusammengefasst) werden und gemeinsam von der Rückholmechanik 62 eingeholt (z.B. aufgewickelt) werden können. Zusätzlich können bei der Verwendung mehrerer Rückholseile diese von vornherein teilweise gebündelt vorliegen. Bevorzugt ist die Führung 80 am Gassack 22' angeordnet und als ein mit diesem verbundenes Gewebeteil ausgeführt. Für eine optimale Krafteinleitung ist es zweckmäßig, die Führung 80 benachbart zu Bereichen anzuordnen, in denen der Gassack 22' am Kraftfahrzeug 1 fixiert ist (z.B. in der Nähe von Fixierbändern des Gassacks).

Die Figuren 5A bis 5D zeigen den Ablauf des Rückholvorganges unter Verwendung der Rückholeinrichtungen 6a', 6b', wobei jeweils nur der linke seitliche Bereich 232 des Gassacks 22' dargestellt ist.

Im Ausgangszustand nach dem vollständigen Aufblasen des Gassacks 22' (Fig. 4) ist das erste (äußere) Rückholseil 61b' gestrafft (gespannt), welches somit zumindest näherungsweise geradlinig mit seinem ersten Teilbereich 610b' von der Rückholmechanik 6a' (bzw. der Führung 80) zur Öffnung 8b in der der Frontscheibe zugewandten Seite (Gassackunterseite) der ersten Materiallage 240 des Gassacks 22' und von dort abgewinkelt mit seinem zweiten Teilbereich 620b' im Gassackinneren bis zu der der Frontscheibe 11 abgewandten Seite (Gassackoberseite) der zweiten Materiallage 250 des Gassacks 22' verläuft. Die Länge des zweiten (inneren) Rückholseiles 61a' ist derart bemessen, dass es bei vollständig aufgeblasenem Gassack in einem nicht gestrafften Zustand vorliegt, so dass seine beiden Teilbereiche 610a', 620a' locker (durchhängend) zwischen der Rückholmechanik 6a' (bzw. der Führung 80) und der Öffnung 8a bzw. zwischen der Öffnung 8a und der zweiten Materiallage 250 verlaufen.

Bei Aktivierung der Rückholmechanik 6a' werden die durch diese aufgebrachten Kräfte (z.B. durch Aufwickeln der Rückholseile 61a', 61b') zunächst nur über das bereits gestraffte erste Rückholseil 61b' insbesondere auf die zweite Materiallage 250 übertragen. Die zweite Materiallage 250 wird durch das Rückholseil 61b' unter Verkürzung seines zweiten Teilbereiches 620b' in Richtung der ersten Materiallage 240 gezogen. Dabei wird das Rückholseil 61b' (der zweite Teilabschnitt 620b') durch die Öffnung 8b in der ersten Materiallage 240 hindurch gezogen, bis die zweite Materiallage 250 an der ersten Materiallage 240 anliegt. Die beiden Materiallagen 240, 250 kommen insbesondere in dem Bereich, in dem das Ende 611b' des Rückholseils 61b' an der zweiten Materiallage 250 festgelegt ist, bzw. im Bereich der Öffnung 8b miteinander zur Anlage, so dass die Länge des zweiten Teilbereichs 620b' bis auf Null verkürzt wird. Dieser Zustand ist in Fig. 5B dargestellt. Denkbar ist dabei, dass sich der Durchdringungspunkt (die Öffnung 8b) in der ersten Materiallage 240 relativ zum Rückholseil 61b' (auf diesem) verschiebt.

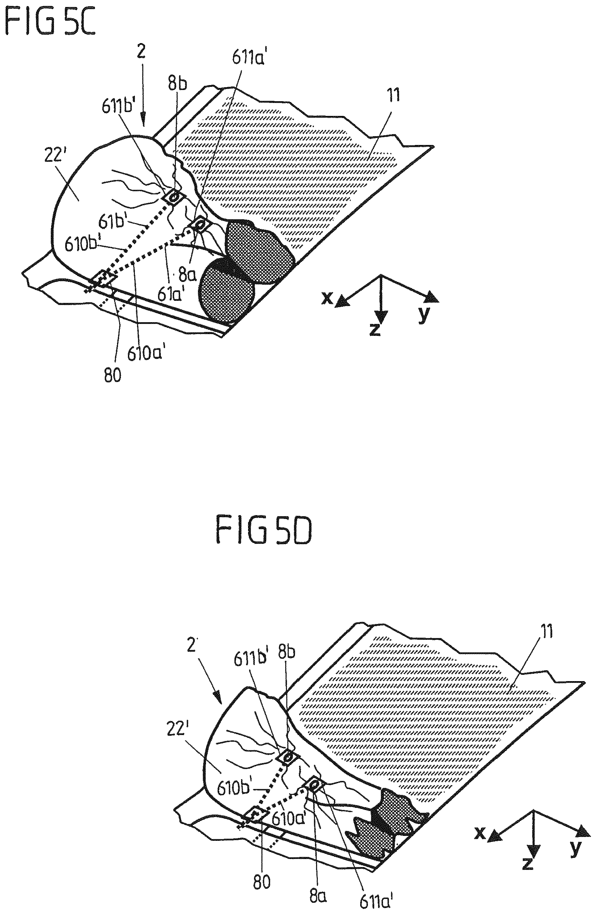

Mit dem oben beschriebenen Aufwickeln des ersten Rückholseils 61b' wird zunächst der obere Bereich des die A-Säule abdeckenden Bereiches 232 des Gassackes 22' zurückgezogen, wobei gleichzeitig auch das zweite Rückholseil 61a' aufgewickelt wird, bis auch dieses gestrafft (gespannt) ist und seine beiden Teilbereiche 610a', 620a' zumindest annähernd geradlinig verlaufen. In Abhängigkeit von der Auslegung der Längen der beiden Rückholseile 61a', 61b' erfolgt das Einnehmen des gestrafften Zustandes vor, mit oder nach dem durch das Aufwickeln des ersten Rückholseils 61b' hergestellten Kontakt zwischen der zweiten Materiallage 250 und ersten Materiallage 240. Im weiteren Verlauf des Aufwickelns (Verkürzens) der beiden Rückholseile kommen die beiden Materiallagen 240, 250 auch im Bereich der Öffnung 8a miteinander zur Anlage (Fig. 5C). Mit fortschreitendem Aufwickeln wird der partiell flach zusammengezogene Gassack nun auch in seinem zwischen den A-Säulen-Bereichen in Richtung Motorhaube gezogen.

Fig. 5D zeigt den Zustand des Gassacks 22' nach dem Beenden des Aufwickelvorganges. Die Rückholseile 61a', 61b' sind nahezu vollständig aufgewickelt. Der Gassack 22' befindet sich in seiner untersten Position, das Sichtfeld für die Fahrzeuginsassen ist frei.

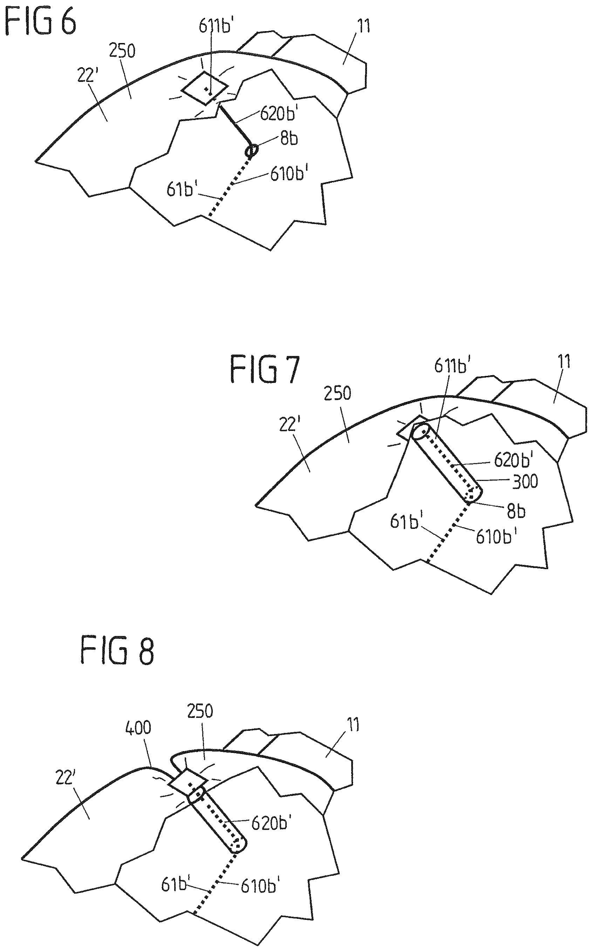

Die Figuren 6 bis 8 illustrieren verschiedene Varianten der Führung eines Rückholseils 61 zwischen der ersten und der zweiten Materiallage 240, 250, d.h. im Innern des Gassacks.

Fig. 6 zeigt den Gassack der Fig. 5A, und zwar in einer im Bereich des äußeren Rückholseils 61b' teilweise aufgebrochenen Ansicht. Die detaillierte Beschreibung dieser Variante des Verlaufs des Rückholseiles 61b' kann auch den vorhergehenden Darlegungen, speziell der zu den Figuren 4 und 5A-D, entnommen werden. Insbesondere ist das Ende 611b' des zweiten Teilabschnitts 620b' des Rückholseiles 61b' an der zweiten Materiallage 250 festgelegt, d.h. an einer Materiallage, die der Frontscheibe 11 abgewandt ist.

Ergänzend wird angemerkt, dass die Öffnung 8b' bei Bedarf durch geeignete Maßnahmen (z.B. Silikonschichten) abgedichtet sein kann. Dies kann dazu dienen, ein Abströmen von Gas (d.h. Leckverluste) über diese Öffnung zu verhindern.

In Fig. 7 ist eine Abwandlung dargestellt, mit der die erwähnten Leckverluste vermieden werden können. Vorliegend verläuft zwischen der ersten Materiallage 240 und der zweiten Materiallage 250 ein Kanal 300, dessen Inneres gegenüber dem Inneren des Gassackes abgetrennt (abgedichtet) ist und der Führung des Rückholseils im Inneren des Gassacks 22' dient. Hier steht das Innere des Gassackes 22' nicht mehr über die Öffnung 8b mit der Umgebung in Verbindung. Der Kanal 300 wird z.B. durch ein (insbesondere flexibles) Hohlelement ausgebildet.

Gemäß der Variante der Fig. 8 verläuft das Rückholseil 61b' in einer Aussparung in Form eines Einschnitts 400 des Gassacks 22', der sich ausgehend von einer Seite (einem Seitenrand) in den Gassack 22' hinein erstreckt. Somit verläuft das Rückholseil 61b' zwar zwischen der ersten und der zweiten Materiallage 240, 250, jedoch nicht durch das aufblasbare Volumen des Gassacks hindurch, so dass Leckverluste vermieden werden. Durch überbrückende Elemente (z.B. in Form von Gewebelagen), die zwei einander gegenüberliegende Abschnitte des Einschnitts 400 miteinander verbinden, kann einem Aufspreizen des Einschnitts 400 entgegengewirkt werden.

Der Einschnitt 400 ist z.B. so in einer Seite (z.B. des linken oder rechten Bereichs 232, 233) ausgebildet, dass der aufgeblasene Gassack 22' im Bereich des Einschnitts eine geringere Ausdehnung entlang der Fahrzeugquerrichtung aufweist als die über und unter dem Einschnitt liegenden Bereiche des Gassacks.

Es wird darauf hingewiesen, dass Elemente der vorstehenden Ausführungsbeispiele natürlich auch in Kombination miteinander verwendet werden können. So können z.B. die Varianten der Fig. 6 bis 8 auch mit dem Ausführungsbeispiel der Fig. 4 benutzt werden.

## Patentansprüche

1. Gassackanordnung für ein Kraftfahrzeug, mit
- einem Gassack (22'), der zum Schutz einer sich außerhalb des Kraftfahrzeugs (1) befindlichen Person entlang zumindest eines Teilabschnitts einer Frontscheibe (11) und/oder eines sonstigen Abschnitts einer Außenseite des Kraftfahrzeugs (1) entfaltbar ist;
- einer Einrichtung (6) zum Bewegen zumindest eines Teilabschnittes des aufgeblasenen Gassacks (22') aus dem Sichtfeld des Fahrzeugführers bzw. eines anderen auf den vorderen Fahrzeugsitzen befindlichen Fahrzeuginsassen, wobei
- die Einrichtung (6) zum Bewegen mindestens ein an dem Kraftfahrzeug (1) oder an einem mit dem Kraftfahrzeug (1) fest verbundenen Teil festzulegendes und mit dem Gassack (22') gekoppeltes Verbindungselement (61a', 61b') aufweist, wobei
- der Gassack (22') eine erste und eine zweite Materiallage (240, 250) aufweist, die ein aufblasbares Volumen des Gassacks (22') begrenzen, wobei
- die Einrichtung (6) zum Bewegen eine Rückholmechanik (62) zum Einholen des Verbindungselementes (61a', 61b') und damit des Gassacks (22') aufweist, und wobei ein Ende (612a', 612b') eines ersten Teilabschnitts (610a', 610b') des Verbindungselementes (61a', 61b') über die Rückholmechanik (62) mit dem Fahrzeug (1) verbunden ist,
**dadurch gekennzeichnet, dass**
der erste Teilabschnitt (610a', 610b') des Verbindungselements (61a', 61b') - bezogen auf den aufgeblasenen Zustand des Gassacks (22') - entlang einer Außenseite der ersten Materiallage (240) verläuft und ein sich dem ersten Teilabschnitt (610a', 610b') anschließender zweiter Teilabschnitt (620a', 620b') des Verbindungselements (61a', 61b') an der zweiten Materiallage (250) festgelegt ist, wobei - bezogen auf die im Kraftfahrzeug (1) eingebaute Gassackanordnung (2) und auf den aufgeblasenen Zustand des Gassacks (22') - die erste Materiallage (240) des Gassacks (22') der Frontscheibe (11) des Kraftfahrzeug (1) zugewandt und die zweite Materiallage (250) der Frontscheibe (11) abgewandt ist, wobei sich der erste Teilabschnitt (610a', 610b') von der Rückholmechanik (62) kommend zwischen der Frontscheibe (11) und der ersten Materiallage (240) erstreckt.

2. Gassackanordnung nach Anspruch 1, **dadurch gekennzeichnet, dass** das Verbindungselement (61a', 61b') - bezogen auf den aufgeblasenen Gassack (22') - durch eine Öffnung (8a, 8b) in der ersten Materiallage (240) in das Innere des Gassacks (22') eintritt.

3. Gassackanordnung nach einem der vorhergehenden Ansprüche, **dadurch gekennzeichnet, dass** der erste und der zweite Teilabschnitt (610a', 610b', 620a', 620b') des Verbindungselementes (61a', 61b') im aufgeblasenen Zustand des Gassacks (22') unter einem Winkel zueinander verlaufen.

4. Gassackanordnung nach einem der vorhergehenden Ansprüche, **dadurch gekennzeichnet, dass** der zweite Teilabschnitt (620a', 620b') an einer Innenseite der zweiten Materiallage (250) festgelegt ist.

5. Gassackanordnung nach einem der Ansprüche 1 bis 3, **dadurch gekennzeichnet, dass** das Verbindungselement (61a', 61b') an einer Außenseite der zweiten Materiallage (250) festgelegt ist.

6. Gassackanordnung nach einem der Ansprüche 1 oder 3 bis 5, **dadurch gekennzeichnet, dass** der Gassack (22') eine Aussparung (400) oder einen Kanal (300) aufweist, durch die hindurch der zweite Teilabschnitt (620a', 620b') des Verbindungselementes (61a', 61b') verläuft.

7. Gassackanordnung für ein Kraftfahrzeug, mit
- einem Gassack (22'), der zum Schutz einer sich außerhalb des Kraftfahrzeugs (1) befindlichen Person entlang zumindest eines Teilabschnitts der Frontscheibe (11) und/oder eines sonstigen Abschnitts einer Außenseite des Kraftfahrzeugs (1) entfaltbar ist; und
- einer Einrichtung (6) zum Bewegen zumindest eines Teilabschnittes des aufgeblasenen Gassacks (22) aus dem Sichtfeld des Fahrzeugführers, wobei
- die Einrichtung (6) zum Bewegen mindestens ein mit dem Gassack (22) gekoppeltes Verbindungselement (61) aufweist, das mit seinem ersten und mit seinem zweiten Ende (611, 612) an dem Kraftfahrzeug (1) oder an einem mit dem Kraftfahrzeug (1) fest verbundenen Teil festzulegen ist, und
- die Einrichtung (6) zum Bewegen eine Rückholmechanik (62) zum Einholen des Verbindungselementes (61) und damit des Gassacks (22) aufweist,
**dadurch gekennzeichnet, dass**
das erste Ende (611) außerhalb des Gassacks an dem Kraftfahrzeug (1) oder an einem mit dem Kraftfahrzeug (1) fest verbundenen Teil festzulegen ist und das zweite Ende (612) des Verbindungselementes (61) über die Rückholmechanik (62) mit dem Fahrzeug (1) verbunden ist.

8. Gassackanordnung nach Anspruch 7, **dadurch gekennzeichnet, dass** das Verbindungselement (61) zur Kopplung mit dem Gassack (22) durch eine mit dem Gassack (22) verbundene Führungsvorrichtung (7) geführt und/oder über Befestigungsmittel an dem Gassack (22) befestigt ist, wobei insbesondere die Führungsvorrichtung (7) mindestens eine Schlaufe (71-73) umfasst.

9. Gassackanordnung nach Anspruch 8, **dadurch gekennzeichnet, dass** das Verbindungselement (61) mittels der Führungsvorrichtung (7) so geführt ist, dass es - bezogen auf den aufgeblasenen Zustand des Gassacks (22) - mit einem Abschnitt (614) parallel zu einem oberen Rand (225) des Gassacks (22) verläuft.

10. Gassackanordnung nach Anspruch 9, **dadurch gekennzeichnet, dass** der Abschnitt (614) des Verbindungselementes (61) entlang des oberen Randes (225) des Gassacks (22) verläuft oder beabstandet zu dem oberen Rand (225) des Gassacks (22) verläuft.

11. Fahrzeug mit einer Gassackanordnung nach einem der vorhergehenden Ansprüche.

12. Fahrzeug nach Anspruch 11, **dadurch gekennzeichnet, dass** das Verbindungselement (61, 61a', 61b') mit einem Ende (611, 612, 612a', 612b') an dem Kraftfahrzeug (1) oder an einem mit dem Kraftfahrzeug (1) fest verbundenen Teil festgelegt ist.

13. Fahrzeug mit einer Gassackanordnung nach einem der Ansprüche 11 oder 12, **dadurch gekennzeichnet, dass** das Verbindungselement (61) mit seinem ersten und mit seinem zweiten Ende (611, 612) an dem Kraftfahrzeug (1) oder an einem mit dem Kraftfahrzeug (1) fest verbundenen Teil festgelegt ist.

## Claims

1. A gas bag arrangement for a motor vehicle, comprising
- a gas bag (22') which for the protection of a person present outside the motor vehicle (1) can be deployed along at least a section of a front window (11) and/or another portion of an outside of the motor vehicle (1);
- a device (6) for moving at least a section of the inflated gas bag (22') out of the field of view of the vehicle operator or another vehicle occupant present on the front vehicle seats, wherein
- the device (6) for moving includes at least one connecting element (61a', 61b') to be fixed at the motor vehicle (1) or at a part firmly connected with the motor vehicle (1) and coupled with the gas bag (22'), wherein
- the gas bag (22') includes a first and a second material layer (240, 250), which define an inflatable volume of the gas bag (22'), wherein
- the device (6) for moving includes a retraction mechanism (62) for retracting the connecting element (61a', 61b') and hence the gas bag (22'), and wherein one end (612a', 612b') of a first section (610a', 610b') of the connecting element (61a', 61b') is connected via the retraction mechanism (62) with the vehicle,
**characterized in that**
the first section (610a', 610b') of the connecting element (61a', 61b') - based on the inflated condition of the gas bag (22') - extends along an outside of the first material layer (240) and a second section (620a', 620b') of the connecting element (61a', 61b') adjoining the first section (610a', 610b') is fixed at the second material layer (250), wherein - based on the gas bag arrangement (2) mounted in the motor vehicle (1) and on the inflated condition of the gas bag (22') - the first material layer (240) of the gas bag (22') faces the front window (11) of the motor vehicle (1) and the second material layer (250) faces away from the front window (11), wherein the first section (610a', 610b') coming from the retraction mechanism (62) extends between the front window (11) and the first material layer (240).

2. The gas bag arrangement according to claim 1, **characterized in that** the connecting element (61a', 61b') - based on the inflated gas bag (22') - enters into the interior of the gas bag (22') through an opening (8a, 8b) in the first material layer (240).

3. The gas bag arrangement according to any of the preceding claims, **characterized in that** in the inflated condition of the gas bag (22') the first and the second section (610a', 610b', 620a', 620b') of the connecting element (61a', 61b') extend at an angle to each other.

4. The gas bag arrangement according to any of the preceding claims, **characterized in that** the second section (620a', 620b') is fixed at an inside of the second material layer (250).

5. The gas bag arrangement according to any of claims 1 to 3, **characterized in that** the connecting element (61a', 61b') is fixed at an outside of the second material layer (250).

6. The gas bag arrangement according to any of claims 1 or 3 to 5, **characterized in that** the gas bag (22') includes a cutout (400) or a channel (300), through which the second section (620a', 620b') of the connecting element (61a', 61b') extends.

7. A gas bag arrangement for a motor vehicle, comprising
- a gas bag (22') which for the protection of a person present outside the motor vehicle (1) can be deployed along at least a section of the front window (11) and/or another portion of an outside of the motor vehicle (1); and
- a device (6) for moving at least a section of the inflated gas bag (22) out of the field of view of the vehicle operator, wherein
- the device (6) for moving includes at least one connecting element (61) coupled with the gas bag (22), which with its first and with its second end (611, 612) is to be fixed at the motor vehicle (1) or at a part firmly connected with the motor vehicle (1), and
- the device (6) for moving includes a retraction mechanism (62) for retracting the connecting element (61a', 61b') and hence the gas bag (22'),
**characterized in that**
the first end (611) is to be fixed outside the gas bag at the motor vehicle (1) or at a part firmly connected with the motor vehicle (1) and the second end (612) of the connecting element (61) is connected via the retraction mechanism (62) with the vehicle.

8. The gas bag arrangement according to claim 7, **characterized in that** for coupling with the gas bag (22) the connecting element (61) is guided through a guiding device (7) connected with the gas bag (22) and/or fastened to the gas bag (22) via fastening means, wherein the guiding device (7) comprises at least one loop (71-73).

9. The gas bag arrangement according to claim 8, **characterized in that** the connecting element (61) is guided by means of the guiding device (7) such that with one portion (614) - based on the inflated condition of the gas bag (22) - it extends parallel to an upper edge (225) of the gas bag (22).

10. The gas bag arrangement according to claim 9, **characterized in that** the portion (614) of the connecting element (61) extends along the upper edge (225) of the gas bag (22) or extends at a distance to the upper edge (225) of the gas bag (22).

11. A vehicle with a gas bag arrangement according to any of the preceding claims.

12. The vehicle according to claim 11, **characterized in that** with one end (611, 612, 612a', 612b') the connecting element (61, 61a', 61b') is fixed at the motor vehicle (1) or at a part firmly connected with the motor vehicle (1).

13. A vehicle with a gas bag arrangement according to claim 11 or 12, **characterized in that** the connecting element (61) is fixed at the motor vehicle (1) or at a part firmly connected with the motor vehicle (1) with its first and with its second end (611, 612).

## Revendications

1. Agencement de coussin d'air pour un véhicule automobile, avec
- un coussin d'air (22'), qui peut être déployé pour la protection d'une personne se trouvant à l'extérieur du véhicule automobile (1) le long d'au moins une région partielle d'un pare-brise (11) et/ou d'une partie quelconque d'un côté extérieur du véhicule automobile (1) ;
- un dispositif (6) pour déplacer au moins une région partielle du coussin d'air gonflé (22') hors du champ de vision du conducteur du véhicule ou d'un autre occupant du véhicule se trouvant sur les sièges avant du véhicule, dans lequel
- le dispositif de déplacement (6) présente au moins un élément de liaison (61a', 61b') à attacher au véhicule automobile (1) ou à une pièce solidement reliée au véhicule automobile (1) et couplé au coussin d'air (22'), dans lequel
- le coussin d'air (22') présente une première et une deuxième couches de matière (240, 250), qui limitent un volume gonflable du coussin d'air (22'), dans lequel
- le dispositif de déplacement (6) présente un mécanisme de retenue (62) pour retenir l'élément de liaison (61a', 61b') et dès lors le coussin d'air (22'), et dans lequel une extrémité (612a', 612b') d'une première partie (610a', 610b') de l'élément de liaison (61a', 61b') est reliée au véhicule (1) par l'intermédiaire du mécanisme de retenue (62),
**caractérisé en ce que** la première partie (610a', 610b') de l'élément de liaison (61a', 61b') - rapportée à l'état gonflé du coussin d'air (22') - s'étend le long d'un côté extérieur de la première couche de matière (240) et une deuxième partie (620a', 620b') de l'élément de liaison (61a', 61b') se raccordant à la première partie (610a', 610b') est attachée à la deuxième couche de matière (250), dans lequel - rapportée à l'agencement de coussin d'air (2) installé dans le véhicule automobile (1) et à l'état gonflé du coussin d'air (22') - la première couche de matière (240) du coussin d'air (22') est tournée vers le pare-brise (11) du véhicule automobile (1) et la deuxième couche de matière (250) est située à l'opposé du pare-brise (11), dans lequel la première partie (610a', 610b') s'étend à partir du mécanisme de retenue (62) entre le pare-brise (11) et la première couche de matière (240).

2. Agencement de coussin d'air selon la revendication 1, **caractérisé en ce que** l'élément de liaison (61a', 61b') - rapporté au coussin d'air gonflé (22') - entre à l'intérieur du coussin d'air (22') à travers une ouverture (8a, 8b) dans la première couche de matière (240).

3. Agencement de coussin d'air selon l'une quelconque des revendications précédentes, **caractérisé en ce que** la première et la deuxième parties (610a', 610b', 620a', 620b') de l'élément de liaison (61a', 61b') forment un angle entre elles dans l'état gonflé du coussin d'air (22').

4. Agencement de coussin d'air selon l'une quelconque des revendications précédentes, **caractérisé en ce que** la deuxième partie (620a', 620b') est attachée à un côté intérieur de la deuxième couche de matière (250).

5. Agencement de coussin d'air selon l'une quelconque des revendications 1 à 3, **caractérisé en ce que** l'élément de liaison (61a', 61b') est attaché à un côté extérieur de la deuxième couche de matière (250).

6. Agencement de coussin d'air selon l'une quelconque des revendications 1 ou 3 à 5, **caractérisé en ce que** le coussin d'air (22') présente une découpe (400) ou un canal (300), à travers lequel/laquelle s'étend la deuxième partie (620a', 620b') de l'élément de liaison (61a', 61b').

7. Agencement de coussin d'air pour un véhicule automobile, avec
- un coussin d'air (22'), qui peut être déployé pour la protection d'une personne se trouvant à l'extérieur du véhicule automobile (1) le long d'au moins une région partielle du pare-brise (11) et/ou d'une partie quelconque d'un côté extérieur du véhicule automobile (1) ; et
- un dispositif (6) pour déplacer au moins une région partielle du coussin d'air gonflé (22) hors du champ de vision du conducteur du véhicule, dans lequel
- le dispositif de déplacement (6) présente au moins un élément de liaison (61) couplé au coussin d'air (22), qui doit être attaché par sa première et par sa deuxième extrémités (611, 612) au véhicule automobile (1) ou à une pièce solidement reliée au véhicule automobile (1), et
- le dispositif de déplacement (6) présente un mécanisme de retenue (62) pour retenir l'élément de liaison (61) et dès lors le coussin d'air (22),
**caractérisé en ce que** la première extrémité (611) doit être attachée à l'extérieur du coussin d'air au véhicule automobile (1) ou à une pièce solidement reliée au véhicule automobile (1) et la deuxième extrémité (612) de l'élément de liaison (61) est reliée au véhicule (1) par l'intermédiaire du mécanisme de retenue (62).

8. Agencement de coussin d'air selon la revendication 7, **caractérisé en ce que** l'élément de liaison (61) est guidé pour le couplage au coussin d'air (22) par un dispositif de guidage (7) relié au coussin d'air (22) et/ou est fixé au coussin d'air (22) par des moyens de fixation, dans lequel en particulier le dispositif de guidage (7) comprend au moins un tuyau flexible (71-73).

9. Agencement de coussin d'air selon la revendication 8, **caractérisé en ce que** l'élément de liaison (61) est guide au moyen du dispositif de guidage (7), de telle manière que - rapporté à l'état gonflé du coussin d'air (22) - il s'étende avec une partie (614) parallèlement à un bord supérieur (225) du coussin d'air (22).

10. Agencement de coussin d'air selon la revendication 9, **caractérisé en ce que** la partie (614) de l'élément de liaison (61) s'étend le long du bord supérieur (225) du coussin d'air (22) ou à distance du bord supérieur (225) du coussin d'air (22).

11. Véhicule équipé d'un agencement de coussin d'air selon l'une quelconque des revendications précédentes.

12. Véhicule selon la revendication 11, **caractérisé en ce que** l'élément de liaison (61, 61a', 61b') est attaché par une extrémité (611, 612, 612a', 612b') au véhicule automobile (1) ou à une pièce solidement reliée au véhicule automobile (1).

13. Véhicule avec un agencement de coussin d'air selon une des revendications 11 ou 12, **caractérisé en ce que** l'élément de liaison (61) est attaché avec sa première et sa deuxième extrémités (611, 612) au véhicule automobile (1) ou à une pièce solidement reliée au véhicule automobile (1).
